# EUROPÄISCHE PATENTSCHRIFT

(11) **EP 3 700 739 B1**
(45) Veröffentlichungstag und Bekanntmachung des Hinweises auf die Patenterteilung: **10.11.2021**
(21) Anmeldenummer: 19789858.8
(22) Anmeldetag: 19.09.2019
(51) Int. Cl.: B29C 64/393, B29C 64/35, B29C 64/106, B29C 64/209, B33Y 50/02, B33Y 30/00, B33Y 10/00

(54) **DÜSENSCHMELZEAKKUMULATIONSERKENNUNG**
NOZZLE MELT ACCUMULATION DETECTION
RECONNAISSANCE D'ACCUMULATION DE FONTE DE BUSE

(30) Priorität: 20.09.2018 LU 100933
(43) Veröffentlichungstag der Anmeldung: 02.09.2020
(73) Patentinhaber: BigRep GmbH, 10961 Berlin (DE)
(72) Erfinder: WORMS, Paul, 10961 Berlin (DE); RUIVO, Diego, 10961 Berlin (DE)
(74) Vertreter: Paustian & Partner Patentanwälte mbB
(86) Internationale Anmeldenummer: PCT/EP2019/000272
(87) Internationale Veröffentlichungsnummer: WO 2020/057773

(56) Entgegenhaltungen:
- WO-A1-2017/106978
- WO-A2-2017/137851
- WO-A2-2019/070905
- US-A- 5 303 141
- US-A1- 2010 021 580
- US-A1- 2018 056 608

## Beschreibung

Die vorliegende Offenbarung betrifft ein Verfahren zur Erkennung einer Materialakkumulation an einer Düse einer additiven Fertigungsmaschine bzw. einer Materialauftragsmaschine.

Bei additiven Materialauftragsverfahren bzw. 3D-Druckverfahren kann es auf Grund von Haftungsverlust dazu kommen, dass sich das in der Erstellung befindliche Werkstück von der Bauplattform löst und an der Düse bzw. dem sogenannten Hotend bzw. Druckkopf anhaftet. Dies kann weiterhin dazu führen, dass sich z.B. extrudierte Schmelze bzw. Auftragsmaterial bei Kunststoffdruck am Hotend akkumuliert und das Hotend, den Druckkopf oder sogar die additive Fertigungsmaschine beschädigen kann. Bisher gibt es keine Lösung oder Sensorik um diesen Effekt zu erkennen.

Ein Druckkopf einer additiven Fertigungsmaschine umfasst unter anderem ein Hotend. Das Hotend ist ein Heizblock in welchem beim 3D-Druckverfahren insb. beim FDM-Verfahren (Fused Depositioning Modelling) und FFF-Verfahren (Fused Filament Fabrication) ein Auftragsmaterial aus Kunststoff bzw. Kunststofffilament bzw. Kunststoffgranulat in seinen plastischen Temperaturbereich aufgeheizt wird, um es zu extrudieren und so ein Werkstück schichtweise herzustellen. Das Hotend umfasst unteranderem die Düse, aus welchem der erhitzte Kunststoff austritt.

Wenn der obengenannte Effekt des Haftungsverlusts des in der Erstellung befindlichen Werkstücks auftritt, kann das Werkstück an der Düse und/oder dem Hotend anhaften. Weiter extrudiertes Filament kann sich an dem Hotend angehafteten Werkstück sammeln und aufbauen. Da additive Fertigungsmaschinen üblicherweise zum Beispiel während der Nacht oder dem Wochenende arbeiten, kann die Ablösung des Werkstücks und der Akkumulierung längere Zeit nicht erkannt werden. Dadurch können nicht nur die Düse oder das Hotend beschädigt werden, sondern auch weitere Bauteile und schlimmstenfalls die additive Fertigungsmaschine, weil die Akkumulierung zum Beispiel leicht ein Gewicht erreichen kann, für welches die Mechanik der additiven Fertigungsmaschine nicht ausgelegt ist. Problematisch ist auch, wenn sich die Akkumulation zwischen Extruder und Druckoberfläche bzw. Bauplattform befindet und größer wird. Durch diese Ausdehung entstehen hohe Kräfte die sogar das Hotend nach oben drücken und/oder die gesamte Achse verbiegen können.

Bisher werden gattungsgemäße Hotends gelegentlich mit Silikon bzw. Teflon verkleidet oder beschichtet, um so ein Anhaften eines abgelösten Werkstücks zu verhindern oder erschweren. Allerdings kann eine Akkumulierung dennoch auftreten, wenn sich das abgelöste Bauteil (mechanisch) am Hotend oder anderen Bauteilen des Druckkopfs wie Lüftern oder auch Spalten zwischen den Bauteilen des Druckkopfs verfängt oder anhaftet. Wenn dies geschieht können auch bei den verkleideten bzw. beschichteten Hotends die oben genannten Schäden auftreten.

Der Kunststoff kann dem Hotend durch beliebige Vorrichtungen zugeführt werden, wie zum Beispiel Filamentextruder oder Schneckenextruder bzw. Granulatextruder.

Die Aufgabe der vorliegenden Anmeldung ist es daher ein Verfahren und eine Vorrichtung vorzuschlagen, mit welcher die obengenannten Nachteile verhindert werden können.

Das Dokument WO 2017/106978 A1 offenbart eine Düsenanordnung zum Sprühen eines flüssigen Materials auf ein Substrat, wobei das flüssige Material flüssiges Metall ist und ein Teil der Düse beheizt sein kann.

Das Dokument WO 2019/070905 A2 offenbart die Steuerung eines additiven Fertigungsprozesses in Abhängigkeit von Sensordaten, um einen gewünschten Prozesszustand herzustellen und beizubehalten.

Diese Aufgabe wird durch die Merkmale des beigefügten unabhängigen Anspruchs gelöst, wobei zweckmäßige Ausführungsformen durch die Merkmale der Unteransprüche beschrieben sind.

Die unten beschriebenen Verfahren basieren auf der Erkenntnis und dem Effekt, dass eine Materialakkumulation am Hotend eine isolierende Wirkung hat. Dies bedeutet, dass das Hotend weniger Heizleistung benötigt, um das Auftragsmaterial in seinen plastischen Temperaturbereich aufzuheizen bzw. eine bestimmte Temperatur zu halten.

Gemäß einem Aspekt der vorliegenden Anmeldung umfasst ein Verfahren Erkennung von Materialakkumulation an einem 3D-Druck-Hotend die Schritte vom Erfassen einer Temperatur an einem Hotend. Weiterhin umfasst das Verfahren den Schritt des Erfassens einer Heizleistung an dem Hotend. Weiterhin wird der Schritt des Berechnens eines Verhältnisses der erfassten Temperatur und der erfassten Heizleistung umfasst. Ein Schritt des Vergleichens des berechneten Verhältnisses mit einem Grenzwert, sowie ein Schritt der Durchführung einer Handlung basierend auf dem Ergebnis des Vergleiches sind ebenso umfasst.

Vorteilhafterweise wird durch das Berechnen des Verhältnisses der erfassten Temperatur und der erfassten Heizleistung zueinander, eine Temperaturabhängigkeit vermieden.

Gemäß einem weiteren Aspekt der vorliegenden Anmeldung kann ein Gradient des Verhältnisses von erfasster Temperatur und erfasster Heizleistung bestimmt werden und die Handlung basierend auf diesem Gradienten durchgeführt werden.

Gemäß einem Aspekt der vorliegenden Anmeldung umfasst ein Verfahren Erkennung von Materialakkumulation an einem 3D-Druck-Hotend die Schritte vom Erfassen einer Heizleistung an einem Hotend. Weiter wird der erfasste Heizwert mit einem Grenzwert verglichen. Schließlich wird eine Handlung basierend auf dem Ergebnis des Vergleichs durchgeführt.

Der Grenzwert für den Heizwert kann zum Beispiel für jedes Hotend und Düse d.h. jede Konfiguration empirisch ermittelt werden damit das Verfahren zuverlässig arbeiten kann. Ebenso kann der Grenzwert für den Heizwert rechnerisch ermittelt werden. Bei der Ermittlung kann eine Bauraumtemperatur ebenso berücksichtigt werden, da zum Beispiel bei einer Heizung des Bauraums weniger Heizleistung benötigt wird. Ebenfalls kann der Einfluss einer Lüftung des Bauraums und/oder Hotends berücksichtigt werden. Wenn zum Beispiel eine Lüftung des Bauraums und/oder Hotends eingeschalten ist, wird mehr Heizleistung benötigt, als bei ausgeschalteter Lüftung. Ebenfalls hat eine beheizte Bauplattform Einfluss auf die Heizleistung. Wenn das Hotend zum Beispiel nahe an der heißen Bauplattform befindlich ist bzw. druckt, wird weniger Heizleistung benötigt.

Die oben genannten Grenzwerte können weiterhin zumindest eines sein von: einstellbar, während eines Druckvorganges einstellbar (z.B. bei Materialwechsel) Die Grenzwerte für das jeweilige Material und Konfiguration (verschiedene Hotends, verschiedene Düsen, Bauraumtemperatur, Temperatur der Bauplattform, Betriebszustand der Lüftung) in der Steuerung hinterlegt werden. Sobald das Material gewechselt wird, oder der die Konfiguration geändert wird, wird automatisch der Grenzwert geändert.

Vorteilhafterweise wird durch das Erfassen des Heizwertes und das Vergleichen des Heizwertes mit dem Grenzwert eine einfach zu implementierende Erkennung einer Materialakkumulation ermöglicht.

Gemäß einem weiteren Aspekt der vorliegenden Anmeldung kann die Handlung zumindest eines sein von: Ausgabe einer Benachrichtigung, Abbrechen eines Druckvorgangs, Pausieren eines Druckvorgangs, Verfahren des Hotends in der Vertikalen bezüglich der Bauplattform bzw. dem in Druck befindlichen Werkstück, Anfahren einer Reinigungsstation mit dem Hotend, Reinigen des Hotends durch eine Reinigungseinrichtung.

Gemäß einem weiteren Aspekt der vorliegenden Anmeldung kann der Schritt des Vergleichens erst beim Erreichen einer bestimmten Heizleistung oder Temperatur durchgeführt werden. Dies kann von Vorteil sein, da sowohl in der Aufheizphase vor dem Druck, als auch in der Abkühlphase nach dem Druck bzw. der Erstellung eines Werkstücks der Schritt des Vergleichens eine Störung oder Materialakkumulation fehldetektieren könnte.

Der Schritt des Vergleichens kann wahlweise auch durch den ersten Befehl zur Materialextrusion im Programmcode gestartet und durch den letzten Befehl zur Materialextrusion beendet werden. Mit anderen Worten kann der Schritt des Vergleichens mit oder nach dem Beginn eines Materialauftrags erfolgen und/oder der Schritt des Vergleichens kann mit oder nach dem Ende des Materialauftrags beendet werden. Ebenso ist für die Durchführung des Schritts des Vergleichens eine Kombination aus dem Erreichen einer bestimmten Heizleistung oder Temperatur und dem Befehl zur Materialextrusion möglich.

Gemäß einem weiteren Aspekt der vorliegenden Anmeldung kann der Schritt des Vergleichens mit einem Mittelwert von Temperatur und/oder Heizleistung durchgeführt werden. Der Mittelwert kann über einen definierten Zeitraum bzw. ein definiertes Zeitintervall ermittelt werden. Es kann von Vorteil sein einen Mittelwert für den Vergleich zu verwenden, da somit ein konstanterer Vergleich entsteht und Peaks bzw. Spitzen, welche möglicherweise die Handlung auslösen, dadurch gemindert werden.

Das Zeitintervall für den Mittelwert stellt gewissermaßen eine Filterfunktion für den Mittelwert bzw. das Signal des Mittelwerts dar. Das Zeitintervall sollte nicht zu kurz sein, weil dann das Signal verrauscht wird. Das Zeitintervall sollte auch nicht zu lang sein, damit eine Akkumulation schnell erkannt wird (vorzugsweise innerhalb von max. 30 min) und damit nicht zu viel Rechenleistung in der Steuerung benötigt wird. Bevorzugt wird ein Zeitintervall von 1 bis 5 Minuten verwendet. Besonders bevorzugt ein Intervall von 3 Minuten. Es soll weiterhin verstanden werden, dass jeder Einzelwert von 0 bis 30 Minuten in 30 Sekunden Schritten hier als explizit offenbart gilt, jedoch der Kürze wegen nicht aufgeführt wird.

Die oben genannten Merkmale können beliebig untereinander kombiniert werden.

Weitere Vorteile und Eigenschaften der Offenbarung ergeben sich aus der folgenden, rein illustrativen und in keiner Weise beschränkenden Beschreibung einer bevorzugten Ausführungsform der Offenbarung, unter Bezugnahme auf die beigefügten Figuren; darin zeigt:
Figur 1 eine schematische Ansicht eines 3D-Druck-Hotends.
Figur 2 eine schematische Ansicht eines Hotends mit Akkumulation.
Figur 3 eine Diagram-Ansicht eines Verhältnisses von Temperatur und Heizwert.
Figur 4 ein Ablaufdiagramm einer Ausführungsform.
Figur 5 ein Ablaufdiagramm einer weiteren Ausführungsform.

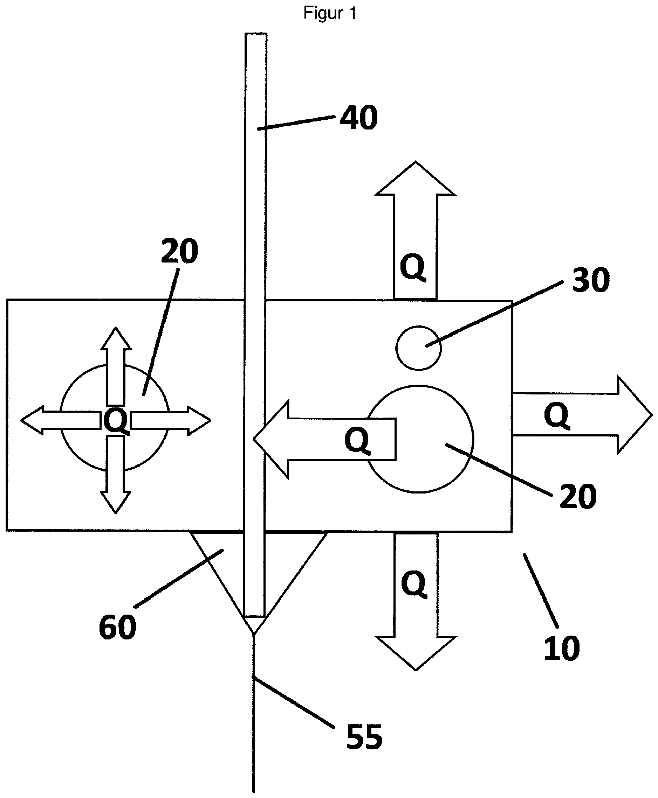

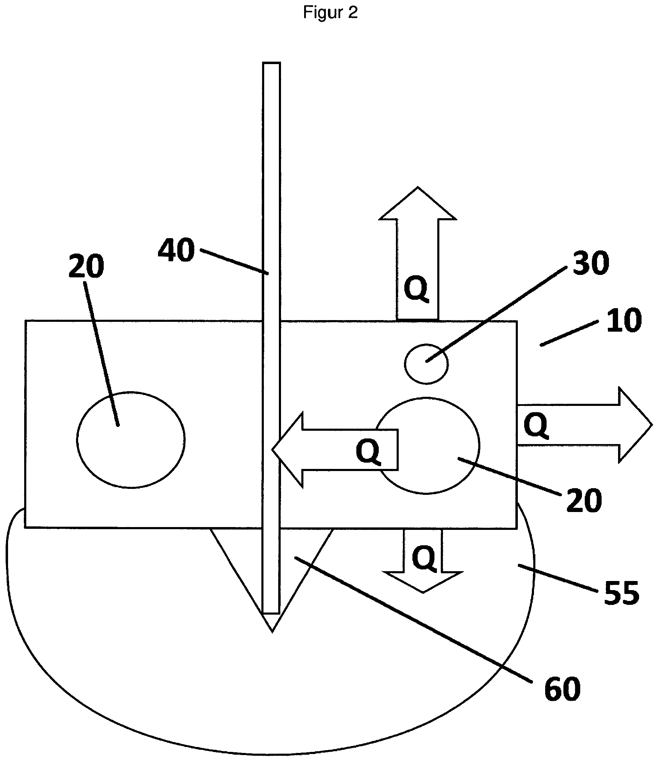

Unter anfänglicher Bezugnahme auf Figur 1 wird eine schematische Darstellung eines Hotends 10 für eine additive Fertigungsmaschine bzw. einen 3D-Drucker gegeben. Das Hotend 10 umfasst zumindest eine Heizung 20 (in der gegebenen Darstellung zwei Heizungen 20), zumindest einen Temperatursensor 30 und eine Düse 60. Filament 40 wird dem Hotend 10 in der Darstellung der Figuren 1 und 2 von oben zugeführt. Das Filament 40 wird im Hotend 10 durch die von den Heizungen 20 bereitgestellte Wärmeenergie bzw. dem Wärmestrom *Q̇* (Pfeile Q) in seinen jeweiligen plastischen Bereich aufgeheizt und durch die Düse 60 als Auftragsmaterial 55 aus dem Hotend 10 ausgetragen. Die Pfeile Q geben an, dass sich der von den Heizungen 20 erzeugte Wärmestrom in alle Richtungen verteilt / strömt und nicht nur an das Filament 40 abgegeben wird. Vereinfacht ausgerückt heizt das Hotend 10 ebenfalls seine Umgebung.

Der Temperatursensor 30 ist mit einer Regelungseinheit (nicht gezeigt) des Hotends 10 verbunden, welche auch die Heizungen 20 regelt. Damit kann eine Temperaturregelung am Hotend 10 erreicht werden. Die Regelung erfasst außerdem eine Heizleistung der zumindest einen Heizung. Dies geschieht durch eine Leistungsmessung eines Heizwiderstands der Heizungen. Alternativ erfasst die Regelung über den Temperatursensor 30 die Temperatur und sendet entsprechende Heizsignale an die Heizungen 20. Diese Heizsignale können ausgelesen bzw. erfasst und damit die Heizleistung bestimmt werden.

Figur 2 zeigt das Hotend 10 der Figur 1, jedoch in den Fall, dass sich eine Materialakkumulation 55 gebildet hat. Filament 40, welches durch den über die Heizungen 20 zugeführten Wärmestrom in seinen plastischen Bereich gebracht worden ist, hat sich in Figur 2 an der Düse 60 gesammelt und die Materialakkumulation 55 gebildet. Diese Materialakkumulation 55 verstopft die Düse 60 und verhindert, dass das Auftragsmaterial 50 vom Hotend 10 weggefördert werden kann.

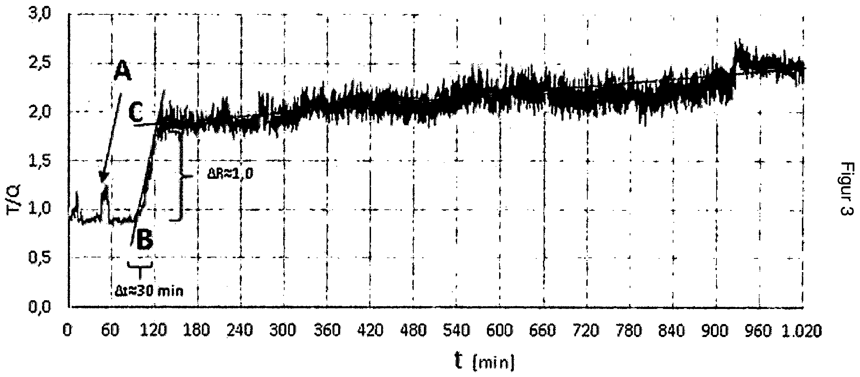

Figur 3 zeigt ein Diagramm eines Verhältnisses von Temperatur des Hotends 10 erfasst durch den Temperatursensor 30 zur Heizleistung der Heizungen 20. Auf der Abszissenachse ist die Druckdauer t in Minuten angetragen und an der Ordinatenachse das Verhältnis von Temperatur zur Heizleistung am Hotend 10. Figur 3 dient lediglich zur Veranschaulichung des Effekts. Im linken Teil des Diagramms der Figur 3, vor dem mit B bezeichneten Anstieg stellt sich das Verhältnis knapp unterhalb des Werts 1 ein. Ein Anhaftungsversuch und damit ein Anstieg des Verhältnisses wird mit A gekennzeichnet. Nach der mit A bezeichneten Spitze im Verhältnis geht der Wert wieder auf knapp unter 1 zurück. Beim Anstieg B (gemittelte Gerade) bildet sich dann über einen Zeitraum von ca. 30min (mit Δt bezeichnet) eine Materialakkumulation am Hotend. Durch die Isolierwirkung der Materialakkumulation (weiter unten detaillierter beschrieben) steigt das Verhältnis um ca. das Doppelte auf einen Wert von knapp unter 2. Danach steigt das Verhältnis zwar stetig, aber moderater an. Dieser Bereich ist mit der gemittelten Geraden C in Figur 3 bezeichnet.

Der Anstieg bzw. Gradient ist in B ist steiler, weil im Bereich der Geraden C das Hotend bereits komplett durch eine Materialakkumulation eingehüllt ist. Damit wird in diesem Zustand die Materialakkumulation langsam größer und die Isolationswirkung der Materialakkumulation nimmt langsamer zu als im Bereich des Gradienten B. Der Volumenstrom bzw. Massenstrom des Auftragsmaterials 50 durch die Düse 60 ist im Wesentlichen identisch zwischen B und C. Durch den höheren Gegendruck im Bereich C ist der Volumenstrom bzw. Massenstrom etwas geringer, als in den Bereich A und B. Der Unterschied ist, dass das Hotend teilweise eingehüllt ist (B) und vollständig eingehüllt ist (C) und daher der Gradient bzw. die Gerade im Bereich C flacher verläuft.

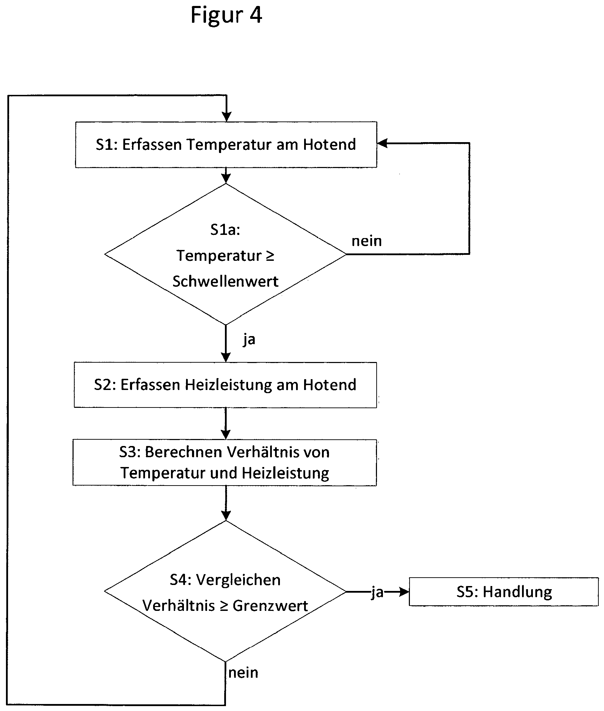

In Figur 4 ist ein Ablaufdiagramm eines Verfahrens nach einer Ausführungsform der vorliegenden Erfindung dargestellt. In einem Schritt S1 wird die Temperatur des Hotends erfasst. Dies kann über vorzugsweise über einen im Hotend vorhandenen Temperatursensor erfolgen, der herkömmlicherweise zur Temperaturregelung des Hotends verwendet wird.

In einem Schritt S1a wird ein Vergleich durchgeführt, ob die im Schritt 1 erfasste Temperatur größer oder gleich ein Schwellenwert ist. Dieser Schwellenwert ist frei wählbar oder programmierbar. Der Schwellenwert dient dazu in der Aufheiz- oder Abkühlphase des Hotends die nach dem Schritt S1a folgenden Schritte nicht auszuführen, da diese Aufheiz- oder Abkühlphasen für die Erkennung einer Materialakkumulation von geringerer Relevanz sind.

Wenn die im Schritt S1 erfasste Temperatur kleiner ist, als der Schwellenwert, erfolgt ein Rücksprung auf Schritt S1. Wenn die im Schritt 1 erfasste Temperatur größer oder gleich dem Schwellenwert ist, erfolgt der nachfolgende Schritt S2.

In Schritt S2 wird die Heizleistung am Hotend erfasst. Dabei werden vorzugsweise bereits aus der Temperaturregelung des Hotends vorhandene Daten verwendet. Es können beispielsweise die Heizsignale verwendet werden, die zur Regelung der Heizpatronen bzw. Heizung gesendet werden.

Im nachfolgenden Schritt S3 wird ein Verhältnis der in Schritt S1 erfassten Temperatur mit der in Schritt S2 erfassten Heizleistung berechnet. Bevorzugt ist dies das eine Verhältnis von Temperatur zu Heizleistung. Eine weitere durchführbare Möglichkeit ist das Verhältnis von Heizleistung zu Temperatur. Hier jedoch kann nachteilig sein, dass dadurch ein Signal entsteht, welches nach unten ausschlägt.

Im nachfolgenden Schritt S4 wird das in Schritt S3 berechnete Verhältnis mit einem frei wählbaren oder frei programmierbaren Grenzwert verglichen. Die Grenzwerte sind beliebige Zahlenwerte. Die Heizwerte können bei einer 8-Bit Auflösung zwischen 0-255 liegen. Die Zahlenwerte für die Grenzwerte können auf z.B. mit einer Nachkommastelle verwendet werden.

Wenn das in Schritt S3 berechnete Verhältnis kleiner als der Grenzwert ist, so folgt als nächstes der Schritt S1 und das Verfahren beginnt erneut. Wenn das in Schritt S3 berechnete Verhältnis gleich dem oder größer als der Grenzwert ist, so folgt als nächstes der Schritt S5.

In Schritt S5 wird zumindest eine Handlung durchgeführt von Ausgabe einer Benachrichtigung, Abbrechen des Druckvorgangs, Pausieren des Druckvorgangs, Verfahren des Hotends in der Vertikalen bezüglich einer Bauplattform oder dem Werkstück, Anfahren einer Reinigungsstation mit dem Hotend, Reinigen des Hotends durch eine Reinigungseinrichtung.

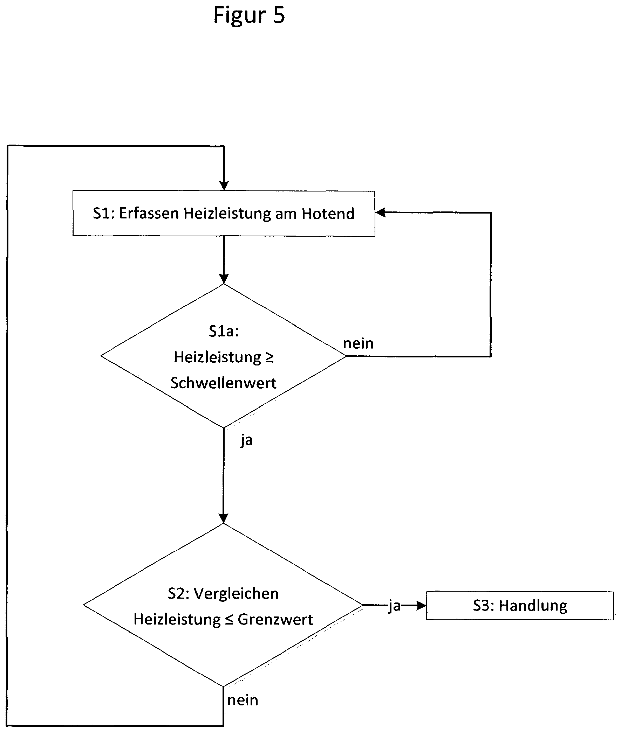

In Figur 5 ist ein Ablaufdiagramm eines weiteren Verfahrens nach einer weiteren Ausführungsform der vorliegenden Erfindung dargestellt. In einem Schritt S1 wird die Heizleistung am Hotend erfasst. Dabei werden vorzugsweise bereits aus der Temperaturregelung des Hotends vorhandene Daten verwendet. Dies können wie oben genannt beispielsweise die Heizsignale sein.

In einem Schritt S1a wird ein Vergleich durchgeführt, ob die im Schritt 1 erfasste Heizleistung größer oder gleich ein Schwellenwert ist. Dieser Schwellenwert ist frei wählbar oder programmierbar. Der Schwellenwert dient dazu in der Aufheiz- oder Abkühlphase des Hotends die nach dem Schritt S1a folgenden Schritte nicht auszuführen, da diese Aufheiz- oder Abkühlphasen für die Erkennung einer Materialakkumulation von geringerer Relevanz sind.

Wenn die im Schritt S1 erfasste Heizleistung kleiner ist, als der Schwellenwert, erfolgt ein Rücksprung auf Schritt S1. Wenn die im Schritt 1 erfasste Heizleistung größer oder gleich dem Schwellenwert ist, erfolgt der nachfolgende Schritt S2.

Im nachfolgenden Schritt S2 wird die in Schritt S1 erfasste Heizleistung mit einem frei wählbaren und/oder frei programmierbaren Grenzwert verglichen.

Wenn die in Schritt S1 erfasste Heizleistung größer als der Grenzwert ist, so folgt als nächstes der Schritt S1 und das Verfahren beginnt erneut. Wenn die in Schritt S1 erfasste Heizleistung gleich dem oder kleiner als der Grenzwert ist, so folgt als nächstes der Schritt S3. Im vergleich zum Verfahren von Figur 4 stellt der Grenzwert eine Art Mindestheizleistung dar, da durch eine Materialakkumulation der oben genannte Isoliereffekt auftritt und damit die benötigte Heizleistung geringer wird.

In Schritt S5 wird zumindest eine Handlung durchgeführt von Ausgabe einer Benachrichtigung, Abbrechen des Druckvorgangs, Pausieren des Druckvorgangs, Verfahren des Hotends in der Vertikalen bezüglich einer Bauplattform oder dem Werkstück, Anfahren einer Reinigungsstation mit dem Hotend, Reinigen des Hotends durch eine Reinigungseinrichtung.

## Patentansprüche

1. Verfahren zur Erkennung von Materialakkumulation an einem 3D-Druck-Hotend, umfassend die Schritte:
Erfassen einer Temperatur an dem Hotend;
Erfassen einer Heizleistung an dem Hotend;
Berechnen eines Verhältnisses von Temperatur und Heizleistung;
Vergleichen des berechneten Verhältnisses mit einem Grenzwert;
Durchführen einer Handlung basierend auf dem Vergleich.

2. Verfahren zur Erkennung von Materialakkumulation an einem 3D-Druck-Hotend, umfassend die Schritte:
Erfassen einer Heizleistung an dem Hotend;
Vergleichen der Heizleistung mit einem Grenzwert;
Durchführen einer Handlung basierend auf dem Vergleich.

3. Verfahren nach Anspruch 1, bei welchem ein Gradient des Verhältnisses bestimmt wird und die Handlung basierend auf dem Gradienten durchgeführt wird.

4. Verfahren nach Anspruch 2, bei welchem ein Gradient der Heizleistung bestimmt wird und die Handlung basierend auf dem Gradienten durchgeführt wird.

5. Verfahren nach einem der Ansprüche 1 bis 4, bei welchem die Handlung mindestens eines sein kann von:
Wiederholen der vorherigen Verfahrensschritte;
Ausgabe einer Benachrichtigung;
Abbrechen eines Druckvorgangs;
Pausieren eines Druckvorgangs;
Verfahren des Hotends in der Vertikalen;
Anfahren einer Reinigungsstation mit dem Hotend;
Reinigen des Hotends durch eine Reinigungseinrichtung.

6. Verfahren nach einem der Ansprüche 1 bis 5, bei welchem der Schritt des Vergleichens erst nach Erreichen einer festgelegten Temperatur oder Heizleistung durchgeführt wird.

7. Verfahren nach einem der Ansprüche 1 bis 5, bei welchem der Schritt des Vergleichens mit oder nach dem Beginn eines Materialauftrags erfolgt und/oder der Schritt des Vergleichens mit oder nach dem Ende des Materialauftrags beendet wird.

8. Verfahren nach einem der Ansprüche 1 bis 6, bei welchem der Schritt des Vergleichens mit einem Mittelwert durchgeführt wird, der über einen definierten Zeitraum ermittelt wurde.

## Claims

1. Method for detecting material accumulation on a 3D-printing-hotend, comprising the steps of:
capturing a temperature at the hotend;
detecting of a heating power at the hotend;
calculating a ratio of temperature and heating power;
comparing the calculated ratio with a limit value;
performing an action based on the comparison.

2. Method of detecting material accumulation on a 3D-printing-hotend, comprising the steps of:
detecting of a heating power at the hotend;
comparing the heating power with a limit value;
performing an action based on the comparison.

3. The method according to claim 1, wherein a gradient of the ratio is determined and the action is performed based on the gradient.

4. The method according to claim 2, wherein a gradient of heating power is determined and the action is performed based on the gradient.

5. The method according to any one of claims 1 to 4, wherein the action can be at least one of:
repeating the previous method steps;
issuing of a notification;
cancelling a print operation;
pausing a print operation;
moving the hotend vertically;
moving to a cleaning station with the hotend;
cleaning of the hotend by a cleaning device.

6. The method according to any one of claims 1 to 5, wherein the step of comparing is performed only after a predetermined temperature or heating power has been reached.

7. The method according to any one of claims 1 to 5, wherein the step of comparing is performed at or after the start of a material deposition and/or the step of comparing is terminated at or after the end of the material deposition.

8. The method according to any one of claims 1 to 6, wherein the step of comparing is performed with an average value determined over a defined period of time.

## Revendications

1. Procédé de détection de l'accumulation de matériel sur un hotend-d'impression-3D, comprenant les étapes :
Saisir une température au niveau du hotend ;
Détection d'une puissance de chauffe au niveau du hotend ;
Calculez un rapport entre la température et la puissance de chauffe ;
Comparer le rapport calculé avec une valeur limite ;
Exécution d'une action basant sur la comparaison.

2. Procédé de détection de l'accumulation de matériel sur un hotend-d'impression-3D, comprenant les étapes :
Détection d'une puissance de chauffe au niveau du hotend ;
Comparez la puissance de chauffe avec une valeur limite ;
Exécution d'une action basant sur la comparaison.

3. Procédé selon la revendication 1, dans lequel un gradient du rapport est déterminé et l'action est effectuée basant sur le gradient.

4. Procédé selon la revendication 2, dans lequel un gradient de puissance de chauffage est déterminé et l'action est effectuée basant sur le gradient.

5. Procédé selon l'une quelconque des revendications 1 à 4, dans lequel l'action de peut être au moins un entre :
Répétez les étapes précédentes du procédé ;
Sortie d'une notification ;
Annuler un processus d'impression ;
Mettre en pause un processus d'impression ;
Bouger le hotend verticalement ;
Positionner le hotend à une station de nettoyage ;
Nettoyage du hotend par un dispositif de nettoyage.

6. Procédé selon l'une quelconque des revendications 1 à 5, dans lequel l'étape de comparaison n'est effectuée qu'après qu'une température ou une puissance de chauffage prédéterminée a été atteinte.

7. Procédé selon l'une quelconque des revendications 1 à 5, dans lequel l'étape de comparaison est réalisée au début ou après le début d'une application de matériel et/ou l'étape de comparaison est terminée à la fin ou après la fin de l'application de matériel.

8. Procédé selon l'une quelconque des revendications 1 à 6, dans lequel l'étape de comparaison est effectuée avec une valeur moyenne déterminée sur une période de temps définie.
